# EUROPEAN PATENT SPECIFICATION

(11) **EP 1 140 472 B1**
(45) Date of publication and mention of the grant of the patent: **17.09.2003**
(21) Application number: 98955615.4
(22) Date of filing: 20.11.1998
(51) Int. Cl.: B29C 63/24, B65H 81/00

(54) **CONTINUOUS AND VARIABLE FUNCTIONING COILING MACHINE FOR REINFORCED PLASTIC PRODUCTS**
KONTINUIERLICH UND VARIABEL FUNKTIONIERENDE WICKELMASCHINE FÜR VERSTÄRKTE KUNSTSTOFFGEGENSTÄNDE
BOBINEUSE A FONCTIONNEMENT CONTINU ET VARIABLE SERVANT A LA FABRICATION DES ARTICLES EN PLASTIQUE RENFORCE

(43) Date of publication of application: 10.10.2001
(73) Proprietor: Pro Mark Center Oy, 39700 Parkano (FI)
(72) Inventor: JÄMIÄ, Aulis, (FI)
(74) Representative: Nieminen, Taisto Tapani
(86) International application number: FI9800909
(87) International publication number: WO00030833

(56) References cited:
- EP-A1- 0 072 962
- EP-A1- 0 596 757
- WO-A1-98/38030

## Description

This invention relates to a spooling apparatusof fibre materials used in the manufacture of oblong reinforced plastic products , by means of which reinforcement fibres are spooled on the product surface.

Previously known is the production of pipes, containers and rolls of reinforced plastic material, where the product is moved in its own axial direction and spooling takes place by means of stationary spooling units as disclosed for instance in document WO-A-98 38030. The product moves at constant speed and from the defibering unit turning around the product tangential fibres are fed onto the product surface. The tangential fibres coming onto the product surface are directed from the stationary feeding apparatus to the product circumference.

By means of the solution a continuous cylindrical product can be made. If several fibre layers are wanted, to the line more tangential and axial defibering units are added in order to increase the material thickness. The production line has in its end portion a hardening unit, furnace or similar, the use of which determines the axial speed of product to be kept substantially continuous. With the fibre spooling units stationary in line, neither the quantity of fibres, an ascending angle ncr any other variation can be realised by any simple means, since it is the question of a continuous spooling line for cylindrical products, for instance.

Also known is a method of defibering for instance in keeping the cylinders in place mounted in stationary bearings and turning them when the tangential fibres are being fed. The device cannot be used for manufacture of a continuous product.
By means of the apparatus according to this invention the problems by the manufacture of a continuous product are solved and a remarkable improvement is achieved in forming fibre directions onto the product surface. The invention is characterized in what is presented in the patent claims.

The advantage of the invention is the variability of fibre directions achieved by continuous spooling, by means of which it is possible in the production line to produce wanted fibre densities in wanted places, while the product is moving at constant speed in the production line. By means of the invention it is easy to make certain spots more firm, thicker,such as shoulders, where one wants to get the fibres on the product surface in structurally most favourable directions. By means of the apparatus as per the invention even the conventional spooling works normally, which means a wide range of use.

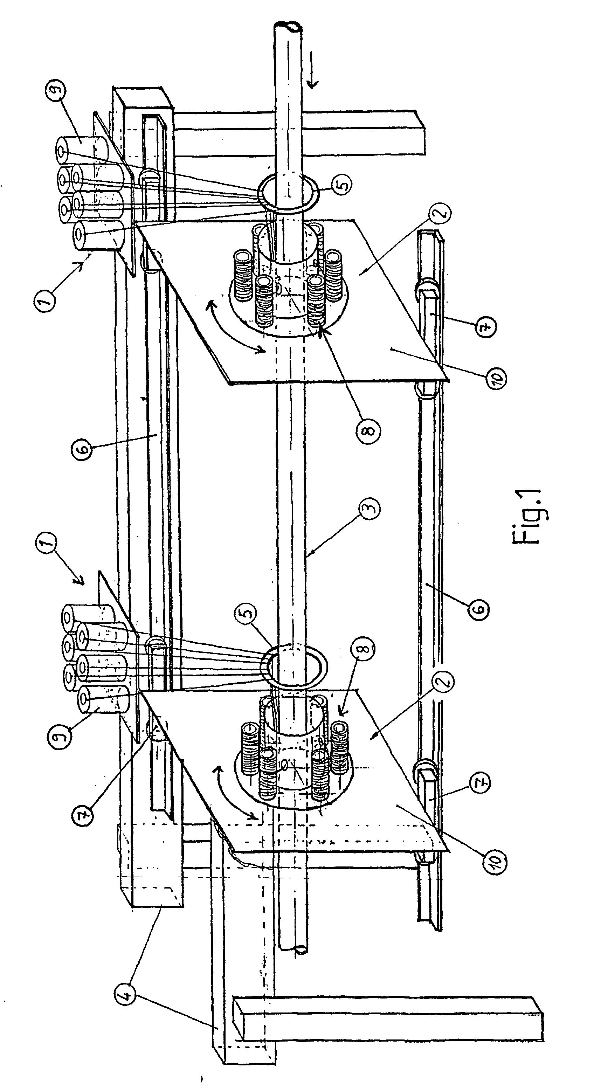

In the following the invention is disclosed with reference to the enclosed drawing, where
- Fig. 1: is a side view of spooler according to the invention comprising two spooling unit pairs.

Figure 1 shows a portion of the apparatus as per the invention, where the spooling units of reinforcement units are located. The product which is to be made of reinforced plastic material, such as pipe 3, travels through one or more spooling units. The apparatus frame 4 consists of vertical and horizontal bearers. On the frame bearers guides 6 are arranged in product 3 direction enabling spooling units be moved along them.

In figure 1 as a unit feeding fibres axially onto product 3 surface, an axial unit 1 is shown, which is formed of a group of reinforced plastic fibre spools 9 and a fibre feeding ring 5. As fibres most suitably glass or carbon fibres known per se are used.

Tangential unit 2 is a unit feeding fibres tangentially onto the product surface and formed of a not-rotating frame part 10 and a part 8 including fibre spools and rotatable around the product.

Both units 1 and 2 can be moved by means of trolleys on guides 6. As guides corner profiles are presented. As moving apparatus of units 1 and 2 works any known mechanism, as a motion screw, toothed bar and wheel, traction motor or, for instance, a motion cylinder. Units 1 and 2 can be moved individually. The first pair of units 1 and 2 shown in figure 1 on the right spools the first layers onto product and the latter pair the next layers.

Moving of units is steered by a control centre in the apparatus (not shown). The control centre has knowledge about advancing of product and on that basis it steers the direction and speed of units 1 and 2 aiming at the wanted fibre form in each layer. In addition, the unit is steered by the control centre either to feed fibre or to have a feeding pause.

The first units begin spooling fibre either onto the stationary arbor in the forepart of the line or onto the core that moves and stays in the tube till the end of line. Unit 1 feeds axial fibres on product and can move making space for unit 2 in order to produce a long travel path for its axial motion. Unit 1 can feed axial fibres in either direction by means of ring 5. From the ring the fibres run evenly onto the whole circumference regardless of the presentation in figure.

Unit 2 can move and spool tangential fibre in any manner wanted on the area available for it in the axial direction. It can be moved substantially faster than the speed of product 3 on the line, whereby it can spool in the product direction as well as against it and also manages to do shiftings in between, as occasion demands.

For instance, in unit 2 the rotating speed of fibre groups 8 is kept constant by rotating them, when the fibre onto the product surface forms are produced in adjusting the motion of unit 2. The fibre groups can be rotated in either direction and, on the other hand, adjusting their speed of rotation the fibre forms are affected, if the unit 2 speed is kept constant. Of course, spooling can be carried out so that the speed of unit 2 and rotation speed of spool group 8 are adjusted simultaneously.

Both units 1 and 2 have such a long of travel path that they cover the travel path of corresponding latter units 1 and 2 which are partly on the line.

In the line there are as many spooling units as needed one after another and in the end or even in between there is a hardening unit, for instance an UV light source or a heating furnace for hardening of fibre-binding resin or similar bonding agent.

With an apparatus according to this invention pipes, pressure pipes, pillars with variable diameters are easily produced observing their stress spots and load spots. Fibre directions are easily arranged as occasion demands and, for instance, fibres in axial direction can be fed in so many layers as wanted by means of to-and-fro motions when the product is moving at constant speed. Naturally, between axial layers unit 2 can spool the tangential fibres. By the manufacture of conical pillars successively as a continuous product, a change of diameter must be done for each pillar unit and at that stage possibly also the fibre direction must be changed. The apparatus as per this invention is well suited, particularly, for the production such a spot and on separating the pillars from one another only a minimal portion must be sawed off from between the pillars.

## Claims

1. A continuously and variably operating spooling apparatus of reinforced plastic products, where the product moves axially during spooling, the apparatus comprising a frame (4) and connected to it there is at least one unit (1) feeding fibres axially onto the product (3) surface, and at least one unit (2) feeding fibres tangentially onto the product surface, and a control centre to steer the said units, **characterized in that** the apparatus has guides (6) arranged in the axial direction of product (3), and activating means for units (1) and (2) to move said units on guides (6) into wanted direction and at wanted speed during spooling steered by the control centre, and that the spooling apparatus included in unit (2) can be rotated around product (3) in neither direction.

2. An apparatus according to patent claim 1 **characterized in that** it is arranged so that when the product (3) is moving through the apparatus during spooling, by means of the motions of movable unit (2) it is possible to produce standard formed or varying fibre structure or several layers on the product surface.

3. An apparatus according to patent claim 1 and 2 **characterized in that** movable unit (2) is arranged so that it can be moved along with product (3) in the same direction, whereby the fibres are either spooled onto the product in order to get a thicker spot or the fibres are not spooled at all, then it is the question of moving unit (2) axially.

4. An apparatus according to any above patent claim 1 - 3 **characterized in that** unit (1) or unit (2) is arranged so that it can be moved in the product (3) direction at a speed greater than the product speed, whereby to-and-fro spooling on the product surface can be done by means of unit (1) or (2) , while the product is moving.

5. An apparatus according to any above patent claim 1 - 4 **characterized in that** it comprises succesive units (1) and (2) and the travel paths of successive units (1) and (2) cover one another partly.

## Patentansprüche

1. Ein kontinuierlich oder variierend arbeitender Aufwickelapparat von Produkten aus Glasfibcrplast, wo sich das Material beim Aufwickeln axial bewegt und der Apparat aus einem Körper (4), besteht, und angeschlossen zu derselben, wenigstens aus einer, axial auf die Fläche des Produkts (3) Fiberspeisenden Einheit (1), und wenigstens aus einer, tangential auf die Fläche des Produkts Fiberspeisenden Einheit (2), und aus einer Steuerzentrale zum Manövrieren der erwähnten Einheiten, **gekennzeichnet dadurch, dass** es im Apparat axial in Richtung des Produkts (3) arrangierte Führungen ( 6) gibt, und Bewegungsmittel für Einheiten (1) und (2) zur Bewegung der erwähnten Einheiten beim Aufwickeln auf Führungen (6) in rechte Richtung und manövriert von der Steuerungszentrale mit gewünschter Geschwindigkeit, und dass der Aufwickler in Einheit (2) um das Produkt (3) in jede Richtung gedreht werden kann.

2. Ein Apparat gemäss Patentanspruch 1, **gekennzeichnet dadurch, dass** er so arrangiert ist, dass es möglich ist, wenn sich das Produkt (3) beim Aufwickeln durch den Apparat bewegt, mit Hilfe der beweglichen Einheit (2) Fiberstruktur von Standardform oder unterschiedlicher Form oder abwechselnder Form oder mit vielen Schichten auf die Produktfläche zu produzieren.

3. Ein Apparat gemäss Patentansprüchen 1 und 2, **gekennzeichnet dadurch, dass** die bewegliche Einheit (2) so arrangiert ist, dass sie mit dem Produkt (3) in die gleiche Richtung bewegt werden kann, wobei die Fibern entweder auf das Produkt aufgewickelt werden, um eine dickere Materialstelle zu erzeugen, oder die Fibern gar nicht aufgewickelt werden, wobei es sich um axiale Bewegung der Einheit (2) handelt.

4. Ein Apparat gemäss Patentansprüchen 1 - 3, **gekennzeichnet dadurch, dass** Einheit (1) oder Einheit (2) so arrangiert ist, dass sie in Richtung des Produkts (3) mit größerer Geschwindigkeit als das Produkt bewegt werden kann, wobei das Hin- und Heraufwickeln auf die Produktfläche mit Hilfe der Einheit (1) oder (2) bei Bewegung des Produkts ausgeführt werden kann.

5. Ein Apparat gemäss Patentansprüchen 1 - 4, **gekennzeichnet dadurch, dass** er zwei Einheiten (1) und (2) nacheinander hat, und dass der Bewegungsbereiche der beiden nacheinander liegenden Einheiten (1) und (2) sich teilweise decken.

## Revendications

1. Un appareil de bobinage à fonctionnement continu et variable pour produits en plastique renforcé de fibres, dans lequel le produit est en mouvement axial pendant le bobinage et qui comprend un cadre (4) et relié à ce dernier au moins une unité (1) alimentant axialement des fibres sur la surface du produit (3) et une unité (2) alimentant tangentiellement des fibres sur la surface du produit et un centre de commande pour commander lesdites unités, **caractérisé en ce que** l'appareil est muni de guides (6) disposés axialement par rapport au produit (3) et de moyens pour activer les unités (1) et (2) de façon à ce que, commandées par le centre de commande, elles avancent, pendant le bobinage, sur les guides (6) dans la direction souhaitée et à la vitesse souhaitée, et **en ce que** l'appareil de bobinage (8) inclus dans l'unité (2) peut être tourné dans les deux sens autour du produit (3).

2. Un appareil selon la revendication 1, **caractérisé en ce qu'**il est adapté de manière à ce que, pendant que le produit (3) traverse l'appareil au moment du bobinage, il soit possible, grâce aux mouvements de l'unité mobile (2), de produire une structure de fibres de forme standard ou variable ou plusieurs couches sur la surface du produit.

3. Un appareil selon les revendications 1 et 2, **caractérisé en ce que** l'unité mobile (2) est adaptée de manière à ce qu'elle puisse être déplacée avec et dans le même sens que le produit (3), les fibres étant alors soit bobinés sur le produit dans le but d'obtenir un endroit plus épais, soit ne pas bobinés du tout, dans lequel cas il s'agit de déplacement axial de l'unité (2).

4. Un appareil selon l'une quelconque des revendications 1 à 3, **caractérisé en ce que** l'unité (1) ou l'unité (2) sont adaptés de manière à ce qu'il soit possible de les faire avancer dans la même direction que le produit et à une vitesse supérieure à celle du produit, le bobinage alternatif sur la surface du produit étant alors réalisable au moyen des unités (1) ou (2) pendant que le produit est en mouvement.

5. Un appareil selon l'une quelconque des revendications 1 à 4, **caractérisé en ce qu'**il comprend les unités successives (1) et (2) et **en ce que** les trajectoires de ces unités successives (1) et (2) se recouvrent partiellement.
